# EUROPEAN PATENT SPECIFICATION

(11) **EP 2 129 071 B1**
(45) Date of publication and mention of the grant of the patent: **01.06.2016**
(21) Application number: 07845869.2
(22) Date of filing: 10.12.2007
(51) Int. Cl.: H04L 29/02, H04L 12/66, H04L 12/26, H04W 24/00

(54) **A METHOD FOR INTERACTIVE INQUIRING THE MEDIA CHANNEL STATUS**
VERFAHREN ZUM INTERAKTIVEN ABFRAGEN DES MEDIENKANALSTATUS
PROCÉDÉ PERMETTANT UNE INTERROGATION INTERACTIVE D'UN ÉTAT DE CANAL MULTIMÉDIA

(30) Priority: 12.03.2007 CN 200710079434
(43) Date of publication of application: 02.12.2009
(73) Proprietor: ZTE Corporation, Shenzhen, Guangdong 518057 (CN)
(72) Inventor: MA, Haibo, Shenzhen Guangdong 518057 (CN)
(74) Representative: Studio Torta S.p.A.
(86) International application number: PCT/CN2007/003512
(87) International publication number: WO 2008/110047

(56) References cited:
- EP-A1- 1 575 223
- EP-A2- 0 944 284
- EP-B1- 1 575 223
- CN-A- 1 835 463
- CN-A- 1 848 755
- KR-A- 20040 001 404
- US-B1- 6 665 300
- US-B1- 6 665 300
- US-B1- 6 788 691
- Anonymous: "Q.2630.3 AAL type 2 signalling protocol - Capability set 3" ITU-T, [Online] October 2003 (2003-10), pages 2FP,I-IV,1-70,106-134, XP002624819 Retrieved from the Internet: URL:http://www.itu.int/rec/T-REC-Q.2630.3- 200310-I/en> [retrieved on 2011-02-22]

## Description

### Field of the Invention

The present invention relates to mobile communication field, in particular to a method for interactive inquiring the media channel status.

### Background of the Invention

With the increasing extensive applications of mobile communication systems in various fields such as economic and social life, mobile communication systems technologies per se are experiencing quick development as well. From the second generation of mobile communication systems used widely at present to the third generation of mobile communication systems being more mature and perfect over time, the development in technology is more and more satisfying the requirements of users on communication systems. International Standardization Organization 3GPP (3rd Generation Partnership Project) is in charge of constituting and amending the international criteria of the third generation mobile communication system, WCDMA(Wideband Code Division Multiple Access) criteria. The protocol of Access Link Control Application Part (ALCAP) is employed widely by 3GPP organization in WCDMA (Wideband Code Division Multiple Access) series criterion as the Bearer Control Protocol of ATM (Asynchronous Transfer Mode) Adaptation Layer Type 2 (AAL2 for short) used between base station (Node B) and Radio Network Controller (RNC), between RNC and Media Gateway (MGW), and between MGW and MGW

As defined in Q.2630 of ITU-T (International Telecommunications Union - Telecommunications standardization sector), ALCAP is AAL2 Bearer Control Protocol, with responsibilities for establishing, modifying and releasing AAL2 media channel between two devices which are interconnected using ATM manner. In Q.2630, the basic unit of media channel used for establishing conversation which controlled by ALCAP is called as AAL2 channel, i.e. Channel Identifier (CID). One AAL2 medial path comprises 255 CID wherein 248 CID can be used for media communication.

AAL2 media channel is established between two devices by a manner in which a request is sent from one end and a response is made by the other end, the flow of which is described in simplification as follows: the initiation end (assumed as End A) selects one CID being in idle status and sends a bearer establishment request for this CID to the correspondent end (assumed as end B). End B, after receiving such request, checks whether this CID is in idle status. If it is idle status, End B returns a bearer establishment success response to End A, otherwise returns a bearer establishment failure. In other words, only when CID is in idle status at both End A and End B, it is possible for the bearer to be established successfully, although there may be many statuses such as idle, seized and blocking for CID. On either Ends A or B, only its own CID status can be determined but its correspondent end can not. As a result, when the two Ends have inconsistent CID statuses, for example, when CID is in idle status on End A but is in blocking status at End B, the bearer establishment failure could occur, so as to cause call loss.

With the current protocol, it is lacked of a method for ensuring CID status to be consistent at both Ends of devices, such that the problem that CID status is inconsistent at both ends of a device due to various abnormal conditions is addressed.

US6788691 discloses a method for establishing a plurality of ATM adaptation layer type 2 channels between internetworking functions across a single ATM virtual channel connection. EP1575223 discloses a method to establish a connection between two AAL2 signalling endpoints inside a communication network. Furthermore, US665300 discloses method for avoiding collisions caused by simultaneous allocation of the same channel identifier (CID) to two AAL2 connections over an ATM virtual channel connection between first and second nodes in an asynchronous network, the avoidance being achieved by using status records.

### Summary of the Invention

To solve the above problems, the present invention provides a method for interactive inquiring the media channel status in which by defining messages, parameters and flow of ALCAP protocol, the interactive inquiring of AAL2 media channel status is performed. Based on thus inquired result, the local CID status is updated which ensures CID status is kept as being consistent at both ends of the device, preventing the call loss caused by the inconsistence.

The present invention provides a method for interactive inquiring the media channel status, comprising the following steps: step 102, the first device constructs the CID status query message after receiving the query command, and sends the CID status query message to the second device to inquire the status of given channel or all channels of the path; step 104, the second device obtains locally the status of the given channel or all channels to be inquired after receiving the CID status query message, and constructs the CID status query confirm message and sends it back to the first device; and step 106, the first device parses the status of the given channel or all channels from the CID status query confirm message after receiving the CID status query confirm message, and sends the status parsed back to a manipulation platform.

According to the present invention, step 106 can further comprise the following steps: the first device compares the parsed status with a local record, and when abnormal status of inconsistence between the parsed status and the local record is found by the comparison, a warning is sent to the manipulation platform; and the manipulation platform, after receiving the warning, automatically initiates corresponding operation, or maintenance personnel, after receiving the warning, initiates corresponding operation. Meanwhile, the corresponding operation can include any one from recovering the channel in abnormal status and blocking the channel in abnormal status.

According to the present invention, the query command can be sent by any one of the following manners: sent by the manipulation platform on schedule, manually sent by a maintenance personnel and automatically sent by the manipulation platform while in abnormal status. The CID status query message can include Connection unit Identifier parameter (CEID), Original Signaling coupling Identifier (OSAID) and destination business endpoint address parameter, in which the Connection unit Identifier parameter represents inquiring the given channel or all channels of the path.

In addition, according to the present invention, the CID status query confirm message can include the Destination Signaling coupling Identifier (DSAID) and the CID status parameter. The CID status parameter can include status parameter identifier, parameter compatibility, parameter length and plural CID status fields. The CID status field can be one byte, indicating the CID status. The CID status can include any one of Idle, Transient, Seized, Maintenance Blocking, Failure, Unequipped and Spare.

According to the method of interactive inquiring the media channel status of the present invention, if the Connection unit Identifier parameter in the CID status query message indicates inquiring all channels of the path, plural CID status fields in the CID status query confirm message are used for indicating all the channels respectively; if the Connection unit Identifier parameter in the CID status query message indicates inquiring the given channel of the path, one CID status field in the CID status query confirm message is used for indicating the given channel respectively.

Meanwhile, when all channels of the path are in identical status, one CID status field in the CID status query confirm message is used for indicating the status of all channels.

With the method of interactive inquiring the media channel status according to the present invention, it can be achieved that the CID statuses at both ends of a device are interactively inquired, and depending on the inquired result, maintenance personnel is reminded to intervene or the recovered flow and the blocked flow are automatically initiated, such that CID statuses are identical at both ends of the device, so as to avoid the call loss problem caused by the bearer establishment failure.

The other features and advantages of the present invention will be set forth in the following description and become partly from the description, or be understood by implementing the present invention. The objects and other advantages of the present invention will be achieved and obtained by the written description and Claims as well as the constructions indicated in the Figures.

### Brief Description of the Drawings

The drawings in the specification provide a further understanding to the present invention and constitute a part of the application. The exemplary embodiments of the present invention and the explanation thereof are given thereafter by way of illustration only, and thus are not limitative of the present invention, and wherein:
Fig 1 is a flowchart of a method for interactive inquiring the media channel status according to the embodiments of the present invention;
Fig 2 is a schematic diagram of CID status parameter structure according to the embodiment of the present invention;
Fig 3 is a schematic diagram of a flow of AAL2 media path inquiring and abnormity handling which are initiated by the manipulation platform according to the embodiment of the present invention.

### Detailed Description of the Preferred Embodiments

The preferable embodiments of the present invention will be described hereinafter in conjunction with drawings. It can be understood that the preferable embodiments described herein are only used for describing and explaining the present invention but not for limiting the present invention.

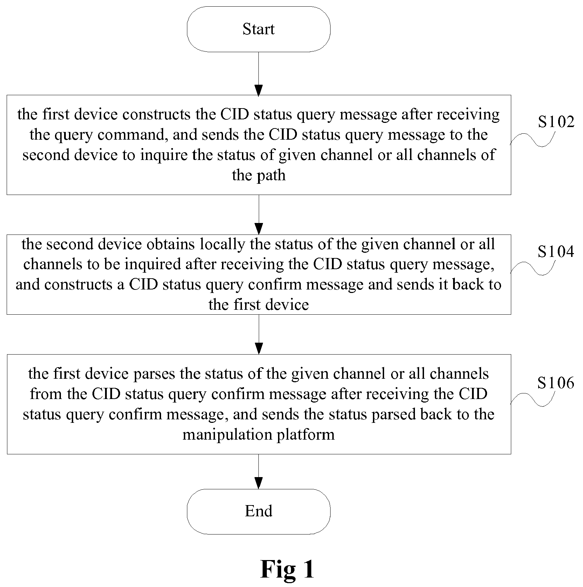

Fig 1 is a flowchart of a method for interactive inquiring the media channel status according to the embodiments of the present invention. As shown in Fig 1, the method comprises steps as follows:
Step 102, the first device constructs the CID status query message after receiving the query command, and sends the CID status query message to the second device to inquire the status of given channel or all channels of the path;
Step 104, the second device obtains locally the status of the given channel or all channels to be required after receiving the CID status query message, and constructs the CID status query confirm message and sends it back to the first device; and
Step 106, the first device parses the status of the given channel or all channels from the CID status query confirm message after receiving the CID status query confirm message, and sends the status parsed back to the manipulation platform.

Meanwhile, step 106 further comprises the steps: the first device compares the parsed status with local record, and when abnormal condition of inconsistence between the parsed status and the local record is found by the comparison, a warning is sent to the manipulation platform; after receiving the warning, the manipulation platform automatically initiates corresponding operation, or after receiving the warning, a maintenance personnel initiates corresponding operation. Meanwhile, the corresponding operation can include any one from recovering the channel in abnormal status and blocking the channel in abnormal status.

The query command is sent by any one of the following manners: sent by the manipulation platform on schedule, manually sent by a maintenance personnel and automatically sent by the manipulation platform while in abnormal status. The CID status query message can include Connection unit Identifier (CEID) parameter, Original Signaling coupling Identifier(OSAID) and destination business endpoint address parameter, in which the CEID represents inquiring the given channel or all channels of the path.

In addition, the CID status query confirm message includes the DSAID and the CID status parameter. The CID status parameter can include status parameter identifier, parameter compatibility, parameter length and plural CID status fields. The CID status field can be one byte, indicating the CID status. The CID status can include any one of Idle, Transient, Seized, Maintenance Blocking, Failure, Unequipped and Spare.

With the method of interactive inquiring the media channel status of the present invention, if the CEID in the CID status query message indicates inquiring all channels of the path, plural CID status fields in the CID status query confirm message are used for indicating all the status of channels respectively; if the CEID in the CID status query message indicates inquiring the given channel of the path, one CID status field in the CID status query confirm message is used for indicating the status of given channel respectively.

Meanwhile, when all channels of the path are in identical status, one CID status field in the CID status query confirm message is used for indicating the status of all channels.

The method of interactive inquiring the media channel status as above particularly comprises the steps as follows:
The first step, CID status query (CSQ) message and CID status query confirm (CQC) message are defined wherein the identifier of CSQ message is 00001100, and the identifier of CQC message is 00001101.

The second step, CID status parameter (CIDS) is defined with the parameter identifier being 00001110, wherein each CID status is indicated by one byte and currently it is possible to only use the last 3 bits and the remaining bits are kept for backup. Meanwhile status parameters are set as follows:
- 000: Idle
- 001: Transient
- 002: Seized
- 003: Maintenance Blocking
- 004: Failure
- 005: Unequipped
- 006: Spare
- 007: Spare

The above parameters, whose max length is 248, can inquire one given CID status or all CID statuses of one path, even if the media channel status is inquired by CSQ.

The third step, CSQ message is intended to comprise the CEID, the OSAID and the destination business endpoint address parameter. CEID can indicate either given CID inquired of one path, or all CID inquired of one path. In this way, one or more CID statues can be inquired by using CSQ message.

The fourth step, CQC message is intended to comprise the DSAID and CID status parameter wherein the CID status field in the CID status parameter is denoted by one byte having 8 bits. If one CID status is inquired in the CSQ message, one status parameter field in CQC indicates the CID status. If all CID statuses of one path are inquired in the CSQ message, 248 status parameter fields in CQC indicate all the CID statuses of one path respectively. What needs to be stated is, when all the CID statuses of one path are identical, it is also possible that only one CID status field of CQC is used to indicate all the CID statuses of the path.

The fifth step, after receiving the CQC message, the CID status at the correspondent end is checked to determine whether it is consistent with that at the local end. If it is inconsistent, a warning can be sent to the manipulation maintenance platform to remind the engineering maintenance personnel to intervene, and optionally initiated a recovering or blocking flow for the CID under inconsistent status.

The sixth step, a query on AAL2 media channel can be initiated at both ends of the device, and such query can be initiated on schedule, or initiated manually by the maintenance personnel or initiated automatically by a program during abnormal condition, which is depending on the practical requirement of the device and the internet. The maintenance personnel can configure on the manipulation platform which scheme is employed.

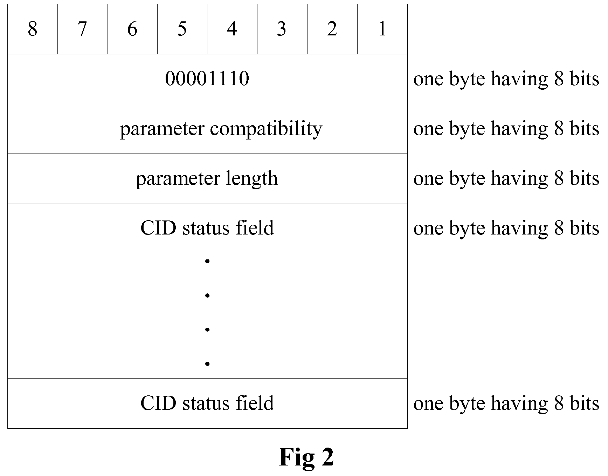

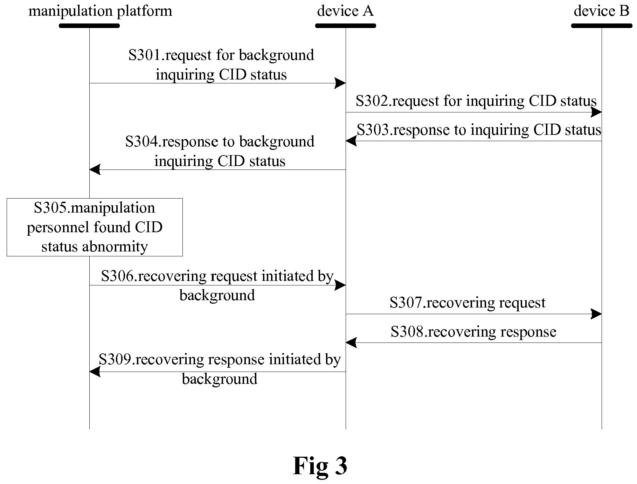

Fig 2 is a schematic diagram of CID status parameter structure according to the embodiment of the present invention, and Fig 3 is a schematic diagram of a flow of AAL2 media channel inquiring and abnormity handling which are initiated by the manipulation platform according to the embodiment of the present invention. Fig 3 will be described in conjunction with Fig 2 as follows.

As shown in Fig 3, the flow of interactive inquiring AAL2 media channel according to the present invention exists between two communication devices carried by ATM. It needs to be stated that the initiation of the inquiring flow is not limited to the manipulation platform, but the program can initiate it automatically or on schedule as well. In addition, according to the present invention, the initial end of the inquiring flow is not limited, that is, both of the two devices A and B in the figure can initiate to perform the bi-directional interactive inquiring the AAL2 media channel.

As shown in Fig 3, primarily the following steps are performed:
Step 301, in which the manipulation personnel, as required, initiates to inquiring a given CID or all CID status in one path from the manipulation platform;
Step 302, in which the device A, after receiving the command from the manipulation platform, constructs CSQ message which is sent to the device B and inquires the device B for the CID status which the manipulation platform demands to inquire;
Step 303, in which the device B, after receiving CSQ message, locally obtains the CID status which is demanded and constructs CQC message which is returned to the device A;
Step 304, in which the device A, after receiving CQC message, parses individual CID status which is compared with a local record, and if abnormity such as the situation that the CID status is inconsistent at both ends is found, a warning is initiated for the manipulation platform, requiring the maintenance personnel to intervene, wherein no matter whether the abnormity of status occurs, the device A is required to return the CID status in the CQC message to the manipulation platform;
Step 305, in which the maintenance personnel found the warning of the abnormity;
Step 306, in which the manipulation platform intervenes and initiates to the device A the operation which returns the CID status to normal or can avoid call loss (for example, recover the CID which has status abnormity);
Step 307, in which the device A sends a recovering request to the device B;
Step 308, in which the device B, after receiving the recovering request sent by the device A, constructs a recovering response which is returned to the device A; and
Step 309, in which the device A returns the recovering result to the manipulation platform.

It can be seen that with the above flow, it is possible to avoid to the maximum extent the problem of call loss which is caused by the inconsistent CID status at both ends of the device.

In summary, the method of interactive inquiring the media channel status according to the present invention can achieve the purpose of interactive inquiring the CID status at both ends of a device, and can remind the maintenance personnel to intervene or automatically initiate to recover and block the flow based on the inquired result, such that the CID status is recovered to be consistent at both ends of the device, so as to avoid the problem of call loss which is caused by bearer establishment failure.

The above is merely the preferable embodiment of the present invention but not used for limiting the present invention. For those skilled in the art, various changes and variations can be made to the present invention.

## Claims

1. A method for interactive inquiring of an AAL2 media channel status, **characterized in**, comprising the following steps:
Step 1 (S102), a first device constructs a CID status query message after receiving a query command from a manipulation platform, and sends the CID status query message to a second device to inquire status of a given channel or all channels of a path;
Step 2 (S104), in which the second device obtains locally the status of the given channel or all channels to be inquired after receiving the CID status query message, and constructs a CID status query confirm message and sends it back to the first device; and
Step 3 (S106), the first device parses the status of the given channel or all channels from the CID status query confirm message after receiving the CID status query confirm message, and sends the parsed status back to the manipulation platform;
**characterized in that** the Step 3 (S106) further comprises steps as follows:
the first device compares the parsed status with a local record, and when abnormal status of CID status inconsistence between the parsed status and the local record for the given or at least one of all channels is found by the comparison, a warning is sent to the manipulation platform; and
the manipulation platform, after receiving the warning, automatically initiates a corresponding operation, wherein the corresponding operation includes any one of recovering the channel in abnormal status and blocking the channel in abnormal status.

2. The method for interactive inquiring the media channel status according to claim 1, **characterized in that** the query command is sent by any one of the following manners: sent by the manipulation platform on schedule, manually sent by a maintenance personnel and automatically sent by the manipulation platform while in abnormal status.

3. The method for interactive inquiring the media channel status according to claim 1, **characterized in that** the CID status query message includes Connection unit Identifier parameter, Original Signaling coupling Identifier and destination business endpoint address parameter, in which the Connection unit Identifier parameter represents inquiring the given channel or all channels of the path.

4. The method for interactive inquiring the media channel status according to claim 3, **characterized in that** the CID status query confirm message includes Destination Signaling coupling Identifier and CID status parameter.

5. The method for interactive inquiring the media channel status according to claim 4, **characterized in that** the CID status parameter comprises status parameter identifier, parameter compatibility, parameter length and plural CID status fields.

6. The method for interactive inquiring the media channel status according to claim 5, **characterized in that** the CID status field is one byte, indicating the CID status.

7. The method for interactive inquiring the media channel status according to claim 6, **characterized in that** the CID status includes any one of Idle, Transient, Seized, Maintenance Blocking, Failure, Unequipped and Spare.

8. The method for interactive inquiring the media channel status according to claim 5, **characterized in that**,
if the Connection unit Identifier parameter in the CID status query message indicates inquiring all channels of the path, plural CID status fields in the CID status query confirm message are used for indicating all the channels respectively; and
if the Connection unit Identifier parameter in the CID status query message indicates inquiring the given channel of the path, one CID status field in the CID status query confirm message is used for indicating the given channel respectively.

9. The method for interactive inquiring the media channel status according to claim 5, **characterized in that**, when all channels of the path are in identical status, one CID status field in the CID status query confirm message is used for indicating the status of all channels.

## Patentansprüche

1. Verfahren zum interaktiven Abfragen eines AAL2-Medienkanalstatus, **dadurch gekennzeichnet, dass** es die folgenden Schritte umfasst:
Schritt 1 (S102), eine erste Vorrichtung baut nach Empfang eines Abfragebefehls von einer Handhabungsplattform eine CID-Statusabfragenachricht auf und sendet die CID-Statusabfragenachricht an eine zweite Vorrichtung, um den Status eines gegebenen Kanals oder aller Kanäle eines Pfads abzufragen;
Schritt 2 (S104), in dem die zweite Vorrichtung lokal den Status des gegebenen Kanals oder aller Kanäle, die nach dem Empfang der CID-Statusabfragenachricht abgefragt werden sollen, erhält und eine CID-Statusabfragebestätigungsnachricht aufbaut und sie zurück an die erste Vorrichtung sendet; und
Schritt 3 (S106), die erste Vorrichtung parst den Status des gegebenen Kanals oder aller Kanäle aus der CID-Statusabfragebestätigungsnachricht nach dem Empfang der CID-Statusabfragebestätigungsnachricht und sendet den geparsten Status zurück an die Handhabungsplattform;
**dadurch gekennzeichnet, dass** der Schritt 3 (S106) ferner die folgenden Schritte umfasst:
die erste Vorrichtung vergleicht den geparsten Status mit einem lokalen Eintrag, und wenn durch den Vergleich ein unnormaler Status einer CID-Statusinkonsistenz zwischen dem geparsten Status und dem lokalen Eintrag für den gegebenen oder wenigstens einen aller Kanäle ermittelt wird, wird eine Warnung an die Handhabungsplattform gesendet; und
nach dem Empfang der Warnung leitet die Handhabungsplattform automatisch einen entsprechenden Betrieb ein, wobei der entsprechende Betrieb das Wiederherstellen des Kanals in einem unnormalen Status oder das Sperren des Kanals in einem unnormalen Status umfasst.

2. Verfahren zum interaktiven Abfragen des Medienkanalstatus nach Anspruch 1, **dadurch gekennzeichnet, dass** der Abfragebefehl durch eine der folgenden Weisen gesendet wird: nach Zeitplan von der Handhabungsplattform gesendet wird, von Wartungspersonal manuell gesendet wird oder von der Handhabungsplattform gesendet wird, während er in einem unnormalen Status ist.

3. Verfahren zum interaktiven Abfragen des Medienkanalstatus nach Anspruch 1, **dadurch gekennzeichnet, dass** die CID-Statusabfragenachricht den Verbindungseinheitskennungsparameter, die originale Signalisierungskopplungskennung und den Zielgeschäftsendpunktadressparameter umfasst, wobei der Verbindungseinheitskennungsparameter die Abfrage des gegebenen Kanals oder aller Kanäle des Pfads umfasst.

4. Verfahren zum interaktiven Abfragen des Medienkanalstatus nach Anspruch 3, **dadurch gekennzeichnet, dass** die CID-Statusabfragebestätigungsnachricht die Zielsignalisierungskopplungskennung und den CID-Statusparameter umfasst.

5. Verfahren zum interaktiven Abfragen des Medienkanalstatus nach Anspruch 4, **dadurch gekennzeichnet, dass** der CID-Statusparameter die Statusparameterkennung, die Statusparameterkompatibilität, die Parameterlänge und mehrere CID-Statusfelder umfasst.

6. Verfahren zum interaktiven Abfragen des Medienkanalstatus nach Anspruch 5, **dadurch gekennzeichnet, dass** das CID-Statusfeld ein Byte ist, das den CID-Status anzeigt.

7. Verfahren zum interaktiven Abfragen des Medienkanalstatus nach Anspruch 6, **dadurch gekennzeichnet, dass** der CID-Status Leerlauf, transient, belegt, Wartungssperrung, Fehler, nicht ausgestattet und Ersatz umfasst.

8. Verfahren zum interaktiven Abfragen des Medienkanalstatus nach Anspruch 5, **dadurch gekennzeichnet, dass**
wenn der Verbindungseinheitskennungsparameter in der CID-Statusabfragenachricht die Abfrage aller Kanäle des Pfads anzeigt, mehrere CID-Statusfelder in der CID-Statusabfragebestätigungsnachricht verwendet werden, um jeweils alle die Kanäle anzuzeigen; und
wenn der Verbindungseinheitskennungsparameter in der CID-Statusabfragenachricht die Abfrage des gegebenen Kanals des Pfads anzeigt, ein CID-Statusfeld in der CID-Statusabfragebestätigungsnachricht verwendet wird, um jeweils den gegebenen Kanal anzuzeigen.

9. Verfahren zum interaktiven Abfragen des Medienkanalstatus nach Anspruch 5, **dadurch gekennzeichnet, dass**, wenn alle Kanäle des Pfads einen identischen Status haben, ein CID-Statusfeld in der CID-Statusabfragebestätigungsnachricht verwendet wird, um den Status aller Kanäle anzuzeigen.

## Revendications

1. Procédé pour interrogation interactive d'un état de canal média AAL2, **caractérisé en ce qu'**il comprend les étapes suivantes :
étape 1 (S102), un premier dispositif construit un message d'interrogation d'état de CID après la réception d'une commande d'interrogation provenant d'une plate-forme de manipulation, et envoie le message d'interrogation d'état de CID à un deuxième dispositif pour interroger l'état d'un canal donné ou de tous les canaux d'un chemin ;
étape 2 (S104), dans laquelle le deuxième dispositif obtient localement l'état du canal donné ou de tous les canaux à interroger après la réception du message d'interrogation d'état de CID, et construit un message de confirmation d'interrogation d'état de CID et le renvoie au premier dispositif ; et
étape 3 (S106), le premier dispositif analyse l'état du canal donné ou de tous les canaux à partir du message de confirmation d'interrogation d'état de CID après la réception du message de confirmation d'interrogation d'état de CID, et renvoie l'état analysé à la plate-forme de manipulation ;
**caractérisé en ce que** l'étape 3 (S106) comprend en outre des étapes suivantes :
le premier dispositif compare l'état analysé à un enregistrement local, et lorsqu'un état anormal d'une incohérence d'état de CID entre l'état analysé et l'enregistrement local pour le canal donné ou au moins l'un de tous les canaux est trouvé par la comparaison, un avertissement est envoyé à la plate-forme de manipulation ; et
la plate-forme de manipulation, après la réception de l'avertissement, initie automatiquement une opération correspondante, l'opération correspondante incluant l'un quelconque parmi la récupération du canal à l'état anormal et le blocage du canal à l'état anormal.

2. Procédé pour interrogation interactive de l'état de canal média selon la revendication 1, **caractérisé en ce que** la commande d'interrogation est envoyée par l'une quelconque des manières suivantes : envoyée par la plate-forme de manipulation dans les délais, envoyée manuellement par un personnel de maintenance et envoyée automatiquement par la plate-forme de manipulation lors d'un état anormal.

3. Procédé pour interrogation interactive de l'état de canal média selon la revendication 1, **caractérisé en ce que** le message d'interrogation d'état de CID comprend un paramètre d'identifiant d'unité de connexion, un identifiant de couplage de signalisation d'origine et un paramètre d'adresse de point de terminaison d'entreprise de destination, le paramètre d'identifiant d'unité de connexion représentant une interrogation du canal donné ou de tous les canaux du chemin.

4. Procédé pour interrogation interactive de l'état de canal média selon la revendication 3, **caractérisé en ce que** le message de confirmation d'interrogation d'état de CID comprend un identifiant de couplage de signalisation de destination et un paramètre d'état de CID.

5. Procédé pour interrogation interactive de l'état de canal média selon la revendication 4, **caractérisé en ce que** le paramètre d'état de CID comprend un identifiant de paramètre d'état, une compatibilité de paramètre, une longueur de paramètre et plusieurs champs d'état de CID.

6. Procédé pour interrogation interactive de l'état de canal média selon la revendication 5, **caractérisé en ce que** le champ d'état de CID est d'un octet, indiquant l'état de CID.

7. Procédé pour interrogation interactive de l'état de canal média selon la revendication 6, **caractérisé en ce que** l'état de CID comprend l'un quelconque parmi inactif, transitoire, saisi, blocage de maintenance, échec, non équipé et en réserve.

8. Procédé pour interrogation interactive de l'état de canal média selon la revendication 5, **caractérisé en ce que**,
si le paramètre d'identifiant d'unité de connexion dans le message d'interrogation d'état de CID indique une interrogation de tous les canaux du chemin, plusieurs champs d'état de CID dans le message de confirmation d'interrogation d'état de CID sont utilisés pour indiquer tous les canaux respectivement, et
si le paramètre d'identifiant d'unité de connexion dans le message d'interrogation d'état de CID indique une interrogation du canal donné du chemin, un champ d'état de CID dans le message de confirmation d'interrogation d'état de CID est utilisé pour indiquer le canal donné respectivement.

9. Procédé pour interrogation interactive de l'état de canal média selon la revendication 5, **caractérisé en ce que**, lorsque tous les canaux du chemin sont dans un état identique, un champ d'état de CID dans le message de confirmation d'interrogation d'état de CID est utilisé pour indiquer l'état de tous les canaux.
